# FASCICULE DE BREVET EUROPEEN

(11) **EP 3 748 935 B1**
(45) Date de publication et mention de la délivrance du brevet: **27.07.2022**
(21) Numéro de dépôt: 20178356.0
(22) Date de dépôt: 04.06.2020
(51) Int. Cl.: H04L 67/1097

(54) **PROCÉDÉ DE STOCKAGE DE FICHIERS NUMÉRIQUES MIS EN OEUVRE PAR UN RÉSEAU AVIONIQUE DÉTERMINISTE ET À ROUTAGE PRÉDÉTERMINÉ, ET SYSTÈME DE COMMUNICATION AVIONIQUE ASSOCIÉ**
VERFAHREN ZUM SPEICHERN VON DIGITALEN DATEIEN, DAS VON EINEM DETERMINISTISCHEN AVIONIKNETZ ANGEWANDT WIRD UND ÜBER EIN VORBESTIMMTES ROUTING FUNKTIONIERT, UND ENTSPRECHENDES AVIONIK-KOMMUNIKATIONSSYSTEM
METHOD FOR STORING DIGITAL FILES IMPLEMENTED BY A DETERMINISTIC AVIONICS NETWORK WITH PREDETERMINED ROUTING, AND ASSOCIATED AVIONICS COMMUNICATION SYSTEM

(30) Priorité: 04.06.2019 FR 1905896
(43) Date de publication de la demande: 09.12.2020
(73) Titulaire: THALES, 92400 Courbevoie (FR)
(72) Inventeur: MONNIER, Stéphane, 33700 CS50108 MERIGNAC (FR); ROGER, Emmanuel, 33700 CS50108 MERIGNAC (FR); DUMERCQ, Philippe, 33700 CS50108 MERIGNAC (FR)
(74) Mandataire: Lavoix

(56) Documents cités:
- CN-A- 104 714 966
- US-A1- 2007 027 589
- US-A1- 2016 154 391

## Description

La présente invention concerne un procédé de stockage de fichiers numériques mis en œuvre par un réseau avionique déterministe et à routage prédéterminé.

La présente invention concerne également un système de communication avionique associé.

Un exemple d'un réseau avionique est décrit dans US 2016/154391 A1.

Les architectures modernes de l'avionique requièrent le stockage à bord des aéronefs de nombreuses données numériques.

Ces données numériques sont de natures différentes et peuvent comprendre par exemple des données avioniques indispensables pour un bon fonctionnement de l'aéronef et des données de criticité moins élevée dont la sauvegarde à bord de l'aéronef présente un certain intérêt. Ces dernières données peuvent comprendre par exemple des données de maintenance, des logs de sécurité ainsi que tout autre type de données comme par exemple des données issues des équipements dédiés pour faire des sauvegardes durant le vol.

Il existe également un grand volume de données qui doivent être lues par différents équipements avioniques lors de l'exploitation de celui-ci. Ces données incluent des bases données contentant par exemple des données cartographiques, des données d'exploitation, des procédures à suivre, etc.

Ainsi, dans la plupart des cas, le stockage de ces données doit être résilient afin de minimiser toute perte de ces données.

Pour ce faire, les architectures modernes utilisent des emplacements de stockage disposés généralement dans les équipements constituant le réseau avionique. Ces emplacements peuvent être éventuellement redondants entre eux en fonction de la nature des données stockées.

La communication avec ces emplacements dans le réseau avionique correspondant s'effectue selon le protocole de communication imposé par ce réseau. Cela permet en particulier de garantir le niveau de sécurité équivalent pour l'ensemble des équipements d'un tel réseau.

L'utilisation des emplacements de stockage dans les réseaux avioniques se heurte toutefois à un certain nombre de difficultés.

Tout d'abord, l'augmentation du volume des données à stocker oblige de multiplier ces emplacements dans différents équipements ce qui présente des difficultés de leur intégration dans le réseau avionique et des coûts conséquents.

En outre, en fonction de la nature des données stockées, il est nécessaire de gérer les droits d'accès à ces données et d'assurer leur ségrégation et redondance ainsi qu'un accès déterministe.

La présente invention a pour but de remédier à ces difficultés et de proposer donc un procédé de stockage des données à bord d'un aéronef permettant d'éviter l'utilisation des emplacements de stockage dédiés dans les équipements avioniques et d'assurer de manière particulièrement simple la gestion de ces données en fonction de leur nature.

À cet effet, l'invention a pour objet un procédé de stockage de fichiers numériques conforme à la revendication 1.

Suivant d'autres aspects avantageux de l'invention, le procédé comprend une ou plusieurs des caractéristiques des revendications 2 à 14.

L'invention a également pour objet un système de communication avionique comprenant au moins M équipements et au moins N commutateurs raccordés entre eux, lesdits équipements et commutateurs étant configurés pour mettre en œuvre le procédé tel que défini précédemment.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique d'un système de communication selon l'invention, le système de communication comportant au moins N commutateurs ;
- [Fig 2] la figure 2 est une vue schématique détaillée de l'un des commutateurs de la figure 1 ; et
- [Fig 3] la figure 3 est un organigramme d'un procédé de stockage selon l'invention, le procédé étant mis en œuvre par le système de communication de la figure 1.

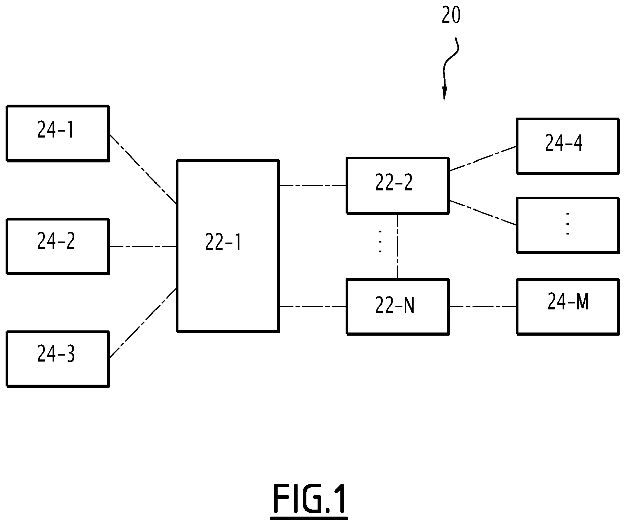

Le système de communication 20 de la figure 1 est embarqué dans un aéronef tel qu'un avion.

Ce système de communication 20 met en œuvre le fonctionnement d'un réseau avionique.

Selon un exemple particulier de réalisation de l'invention décrit par la suite, ce réseau avionique permet de transmettre des données sensibles entre différents systèmes avioniques. Par donnée sensible, on comprend notamment toute donnée dont la perte ou un délai en transmission peut avoir une influence sur la sécurité de l'aéronef.

Le réseau avionique permet de transmettre des trames de données conformément à un protocole de transmission déterminé.

Selon l'invention, ce protocole de transmission est à routage prédéterminé, permet de transmettre les trames de données de manière déterministe et permet d'identifier la provenance de chaque trame de manière certaine.

Dans tout ce qui suit, par routage prédéterminé, on entend un routage selon lequel chaque trame est cheminée dans le réseau selon des règles prédéterminées.

Ces règles prédéterminées sont notamment mémorisées dans une table de configuration de chaque commutateur mettant en œuvre le réseau avionique et définissent le cheminement de chaque trame au sein de ce commutateur.

Ainsi, par exemple, cela est le cas lorsque la table de configuration de chaque commutateur définit pour chaque trame un port d'entrée et un ou plusieurs ports de sortie, ou lorsque la table de configuration de chaque commutateur définit pour chaque trame un ou plusieurs ports de sortie.

Par transmission des trames de données de manière déterministe, on entend la manière de transmission des trames de données permettant de déterminer pour chaque trame de données un temps de transmission maximal, dit latence maximale, et de garantir qu'une telle trame sera transmise en toute circonstance à un temps ne pouvant pas dépasser cette latence maximale.

Enfin, pour identifier la provenance de chaque trame de données de manière certaine, une telle trame comprend par exemple un identifiant comprenant un identifiant de l'équipement ayant émis cette trame.

En outre, avantageusement, le réseau avionique est redondant et comprend à cet effet plusieurs plans de redondance permettant de transmettre des trames de données redondantes de manière indépendante. Dans la suite de la description, le réseau avionique sera expliqué en relation avec un seul plan de redondance. Toutefois, il doit être compris que toute caractéristique décrite ci-dessous reste applicable à chaque plan de redondance d'un tel réseau.

Dans l'exemple décrit ci-dessous, le protocole de transmission du réseau avionique est de type ARINC 664 P7. Cela signifie en particulier que ce protocole de transmission est conforme à la norme ARINC 664 P7 dont la version sera choisie par l'homme du métier en fonction de chaque implémentation concrète du système de communication.

Ainsi, comme cela est connu en soi, dans le cas où le protocole de transmission est de type ARINC 664 P7, chaque trame conforme à ce protocole comprend un entête comportant notamment un champ dit « MAC DEST ».

Par ailleurs, comme cela est également connu en soi, deux octets du champ « MAC DEST » correspondent à une valeur VL appelée « lien virtuel » (ou « Virtual Link » en anglais) et définissant le cheminement de la trame. Les trames comportant une même valeur VL forment un même flux.

La valeur VL est mémorisée dans la table de configuration de chaque commutateur par lequel le flux correspondant à cette valeur VL transite et permet ainsi de cheminer chaque trame au sein de ce commutateur.

Au sens de la présente invention, la valeur VL de chaque trame définit l'identifiant de cette trame.

Comme cela est également connu en soi, chaque trame comprend en outre un champ de données utiles.

Selon d'autres exemples de réalisation, le protocole de transmission du réseau avionique présente tout autre type permettant de rendre le réseau avionique conforme aux caractéristiques précitées, c'est-à-dire de rendre le réseau déterministe, à routage prédéterminé, avantageusement redondant, et permettant d'identifier la provenance de chaque trame de données de manière certaine.

En référence à la figure 1, le système de communication 20 comprend au moins N commutateurs 22-1, ..., 22-N et au moins M équipements 24-1, ..., 24-M.

Chaque équipement 24-1, ..., 24-M, connu également sous le terme anglais de « End System », est intégré dans un système avionique et assure la communication de ce système avec le réseau avionique.

Ainsi, en fonction du système avionique dans lequel il est intégré, chaque équipement 24-1, ..., 24-M peut être émetteur et/ou récepteur des trames de données conformes audit protocole de transmission.

En particulier, chaque équipement 24-1, ..., 24-M peut être émetteur et/ou récepteur des fichiers numériques transportés via le réseau avionique au moyen d'une ou de plusieurs trames.

Autrement dit, chaque équipement 24-1, ..., 24-M est apte à émettre un fichier numérique en intégrant au moins une partie de celui-ci dans le champ de données utiles d'une trame de donnée et/ou à constituer un fichier numérique à partir du champ de données utiles d'une ou de plusieurs trames de données reçues.

Les fichiers numériques ainsi reçus ou émis peuvent être de natures différentes et correspondent notamment à des données destinées à être stockées à bord de l'aéronef.

Ainsi, ces fichiers correspondent par exemple à des données relatives au fonctionnement de différents systèmes avioniques, à des données de maintenance, à des logs de sécurité, etc.

Chaque équipement 24-1,...,24-M est raccordé à au moins l'un des commutateurs 22-1,..., 22-N via des moyens de transmission et via au moins un port de ce commutateur. Les moyens de transmission présentent par exemple un câble à paire torsadée ou tout autre type de câble permettant une transmission bidirectionnelle de données.

Chacun des commutateurs 22-1,...,22-N présente par exemple une structure sensiblement identique. Selon un autre exemple de réalisation, au moins l'un des commutateurs 22-1, ..., 22-N présente une structure différente. Ainsi, dans l'exemple décrit ci-dessous, au moins l'un des commutateurs 22-2, ..., 22-N peut être dépourvu d'unité de stockage.

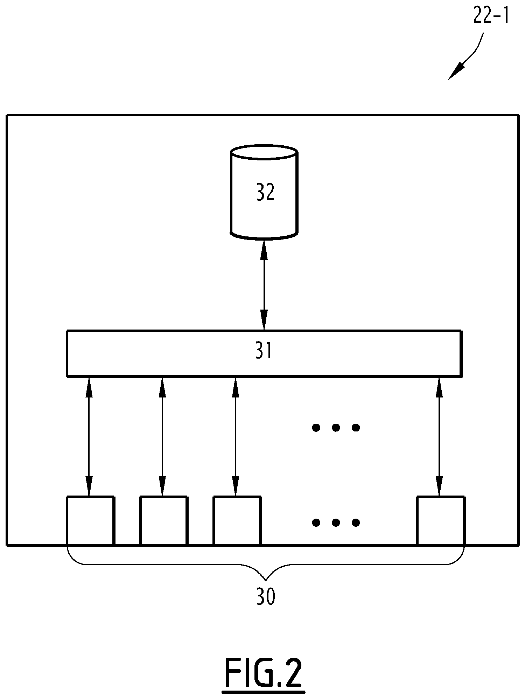

Par la suite, seule la structure du commutateur 22-1 sera expliquée en détail en référence à la figure 2.

Comme cela est visible sur cette figure 2, le commutateur 22-1 comprend une pluralité de ports 30, une composante de cheminement 31 et une unité de stockage 32.

Chaque port 30 est un port d'entrée et/ou de sortie raccordant le commutateur 22-1 à l'un des équipements 24-1,...,24-M ou à un autre commutateur 22-2,...,22-N.

La composante de cheminement 31 permet de cheminer chaque trame entre un port d'entrée vers un port de sortie conformément à la table de configuration du commutateur 22-1 correspondant. Cette table de configuration est par exemple intégrée dans la composante de cheminement 31.

La composante de cheminement 31 permet également, par exemple en fonction de la valeur VL de chaque trame reçue, de copier le contenu du champ de données utiles de cette trame afin de le stocker dans l'unité de stockage 32.

En particulier, selon un exemple de réalisation, afin que le contenu du champ de données utiles d'une trame soit copié, la valeur VL de cette trame est stockée dans la table de configuration de la composante de cheminement 31 avec une mention spécifique de type « à stocker ».

La composante de cheminement 31 permet également à la réception d'une requête correspondante, d'extraire des données stockées dans l'unité de stockage 32 afin de les transmettre au réseau avionique au moyen d'une ou de plusieurs trames de données.

L'unité de stockage 32 se présente par exemple sous la forme d'une composante physique apte à stocker des données numériques, telle qu'un disque dur ou une mémoire de masse à semi-conducteurs.

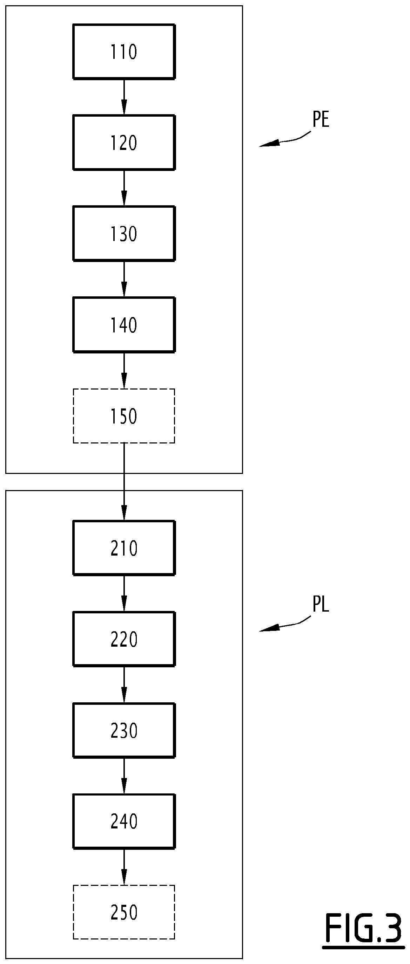

Le procédé de stockage de fichiers numériques mis en œuvre par le système de communication 20 sera désormais expliqué en référence à la figure 3 présentant un organigramme de ses étapes.

En particulier, comme cela est visible sur cette figure 3, ce procédé de stockage comprend une phase d'écriture PE de fichiers numériques et une phase de lecture PL de fichiers numériques.

Chacune de ces phases PE, PL sera expliquée par la suite en détail en relation avec un seul fichier numérique qui est appelé fichier numérique à stocker dans la phase d'écriture PE et fichier numérique à lire dans la phase de lecture PL. Le cas d'une pluralité de fichiers est traité de manière analogue.

La phase d'écriture PE est lancée par un équipement émetteur 24-1,...,24-M lorsqu'il a besoin de stocker un fichier numérique.

En particulier, lors de l'étape initiale 110 de cette phase d'écriture, l'équipement émetteur 24-1,...,24-M détermine un fichier numérique à stocker.

Ce fichier numérique correspond par exemple à un fichier numérique d'origine que l'équipement émetteur 24-1,...,24-M vient de modifier ou à un nouveau fichier numérique créé par l'équipement émetteur 24-1,...,24-M. Dans ce dernier cas, le nouveau fichier numérique sera considéré par la suite en tant qu'un fichier d'origine.

Puis, lors de l'étape 120 suivante, l'équipement émetteur 24-1,...,24-M associe au fichier numérique une référence temporelle qui détermine notamment la date de sa création ou de sa modification.

En particulier, selon un exemple de réalisation, la référence temporelle associée comprend une date locale déterminée par l'équipement émetteur 24-1,...,24-M et un point de référence relatif à cet équipement émetteur 24-1,...,24-M.

La date locale correspond par exemple au temps de l'équipement déterminé par son horloge interne.

Le point de référence relatif à l'équipement émetteur 24-1,...,24-M permet de comparer la date locale déterminée par cet équipement avec des dates locales des autres équipements.

En particulier, selon un exemple de réalisation, le point de référence relatif à un équipement émetteur 24-1,...,24-M est un numéro de démarrage de cet équipement émetteur. Notamment, selon cet exemple de réalisation, les équipements 24-1,...,24-M du système de communication 20 sont démarrés en ordre, l'un après l'autre par exemple à des intervalles de temps réguliers. Dans ce cas, les numéros de démarrage des équipements 24-1,...,24-M permettent de comparer entre elles les dates locales issues de ces équipements.

Lors de l'étape 130 suivante, l'équipement émetteur 24-1,...,24-M envoi le fichier numérique à stocker avec la référence temporelle associée vers K commutateurs distincts au moyen d'une ou de plusieurs trames de données, le nombre K étant inférieur ou égal au nombre N.

En particulier, lors de cette étape, l'équipement émetteur 24-1,...,24-M forme une ou plusieurs trames conformes au protocole de transmission du réseau avionique en mettant dans le champ de données utiles de chacune de ces trames au moins une partie du fichier à stocker et/ou au moins une partie de la référence temporelle associée.

Puis, l'équipement émetteur 24-1,...,24-M rajoute à chaque trame formée un entête comprenant notamment un identifiant permettant de déterminer de manière certaine la provenance de cette trame qui est dans le cas du protocole ARINC 664 P7 présente un lien virtuel.

Avantageusement, les fichiers numériques à stocker correspondant à un même fichier d'origine sont transportées par des trames de données ayant un même lien virtuel. Autrement dit, dans ce cas, différentes versions d'un même fichier d'origine sont transportées par des trames ayant un même lien virtuel.

Enfin, avantageusement, l'équipement émetteur 24-1,...,24-M rajoute à chaque trame un condensant d'intégrité correspondant par exemple à un champ CRC (« Contrôle de Redondance Cyclique ») de cette trame.

Lorsque la ou chaque trame est formée, l'équipement émetteur 24-1,...,24-M transmet cette ou ces trames à K commutateurs 22-1 à 22-N.

Cette transmission s'effectue par exemple en régime multidiffusion de type « multicast » selon la terminologie connue dans l'état de l'art.

Lors de l'étape 140 suivante, au moins certains des K commutateurs reçoivent le fichier numérique à stocker avec la référence temporelle associée.

En particulier, lors de cette étape, la composante de cheminement 31 de chacun des commutateurs ayant reçu la ou les trames transportant le fichier numérique à stocker avec la référence temporelle associée, crée une copie de ce fichier et le stocke dans l'unité de stockage 32 avec la référence temporelle associée. Cela est effectué par exemple uniquement lorsque le lien virtuel de cette ou de ces trames est mémorisé dans la table de configuration du commutateur correspondant avec la mention « à stocker »

Puis, la composante de cheminement 31 transmet la ou les trames reçues vers un autre commutateur conformément à sa table de configuration.

Selon un mode de réalisation, la composante de cheminement 31 crée une copie du fichier numérique à stocker uniquement lorsque le condensant d'intégrité de la ou de chaque trame transportant ce fichier est vérifié.

Par ailleurs, selon un mode particulier de réalisation, l'étape 140 est une étape finale de la phase d'écriture PE dans la mesure où aucune vérification d'une bonne réception du fichier à stocker n'est effectuée par l'équipement émetteur ayant émis ce fichier.

Ce mode de réalisation peut être décrit par le terme anglais « shoot and forget ».

Selon un autre mode de réalisation, la phase d'écriture comprend en outre une étape 150 lors de laquelle l'équipement émetteur 24-1,...,24-M ayant émis le fichier vérifie qu'au moins L commutateurs parmi les K commutateurs ont reçu le fichier numérique à stocker avec la référence temporelle associée. Le nombre L est par exemple inférieur ou égal au nombre K.

L'étape 150 est par exemple mis en œuvre pour chaque fichier numérique à stocker ou pour seulement certains d'entre eux en fonction par exemple de la nature de ce fichier.

La phase de lecture PL est lancée par un équipement récepteur 24-1,...,24-M souhaitant lire un fichier numérique stocké déjà au moyen du système de communication 20.

Lors de l'étape initiale 210 de cette phase de lecture PL, l'équipement récepteur 24-1,...,24-M envoie K requêtes vers K commutateurs 22-1 à 22-N distincts pour restituer chaque copie du fichier à lire stockée dans l'unité de stockage 32 de ces commutateurs.

Chacune de ces requêtes est envoyée au moyen d'au moins une trame conforme au protocole du réseau avionique.

À la réception de ces requêtes, chacun des commutateurs 22-1 à 22-N concernés authentifie la requête correspondante par l'identifiant de la trame l'ayant transportée. Ainsi, dans le cas d'un réseau avionique de type ARINC 664 P7, il s'agit de l'authentification par la valeur VL des trames correspondantes.

Lors de l'étape 220 suivante, l'équipement récepteur 24-1,...,24-M reçoit des réponses à au moins certaines des requêtes envoyées.

Selon un premier mode de réalisation, chaque réponse comprend uniquement la référence temporelle associée à la copie correspondante du fichier à lire.

Selon un deuxième mode de réalisation, chaque réponse comprend la référence temporelle associée à la copie correspondante du fichier à lire et la copie même de ce fichier.

Ces réponses sont alors envoyées par les commutateurs ayant stocké une copie du fichier à lire.

Par ailleurs, selon un exemple de réalisation, cette étape de réception est finalisée lorsque l'équipement récepteur 24-1,...,24-M reçoit l'ensemble des réponses à ses requêtes.

Selon un autre exemple de réalisation, la durée d'exécution de cette étape est limitée par un seuil prédéterminé. Ainsi, dans ce cas, l'équipement récepteur 24-1,...,24-M reçoit uniquement des réponses parvenues dans un intervalle temporel défini alors par ce seuil et passe ensuite à l'étape suivante.

Lors de l'étape 230 suivante, l'équipement récepteur 24-1,...,24-M analyse les références temporelles reçues et sélectionne la référence temporelle correspondant au moment temporel le plus récent.

Cela correspond alors à un vote permettant de sélectionner la version la plus récente du fichier à lire.

Lors de l'étape 240 suivante, l'équipement récepteur 24-1,...,24-M définit le fichier à lire par sa copie associée à la référence temporelle sélectionnée.

En particulier, dans le premier mode de réalisation, l'équipement récepteur 24-1,...,24-M récupère du commutateur correspondant la copie du fichier à lire associée à la référence temporelle sélectionnée. Pour cela, il envoie par exemple une requête à ce commutateur qui répond à cette requête en envoyant la copie à lire demandée.

Dans le deuxième mode de réalisation, l'équipement récepteur 24-1,...,24-M détermine la copie associée à la référence temporelle sélectionnée parmi les copies reçues avec les réponses.

Optionnellement, la phase de lecture PL comprend en outre une étape 250 de vérification lors de laquelle l'équipement récepteur 24-1,...,24-M vérifie le condensat d'intégrité de la ou de chaque trame de données transportant la copie du fichier à lire associée à la référence temporelle sélectionnée.

Ainsi, cette copie est retenue uniquement lorsque l'ensemble de ces condensats d'intégrité sont vérifiés.

On conçoit alors que la présente invention présente un certain nombre d'avantages.

En particulier, l'invention permet de mettre en œuvre un stockage des fichiers numériques en utilisant des propriétés existantes des réseaux avioniques.

Ces propriétés concernent notamment le déterminisme de ces réseaux, le routage prédéterminé ainsi que l'identification certaine des trames.

Cela permet en particulier de mettre en œuvre les phases d'écriture et de lecture de fichiers numériques de manière particulièrement rapide et efficace car aucune étape d'authentification spécifique entre l'équipement émetteur et le commutateur correspondant n'est nécessaire. C'est en effet l'identifiant des trames transportant les fichiers à stocker ou les requêtes pour récupérer ces fichiers, qui permet d'identifier de manière certaine la provenance de chaque trame. Ainsi, l'invention propose d'associer à chaque fichier une liste d'identifiants pour le rendre accessible à toute trame ayant l'identifiant issue cette liste. Dans le cas du protocole de communication de type ARINC 664 P7, c'est la valeur VL qui correspond à un tel identifiant.

Cela permet en outre de régler naturellement les droits d'accès aux fichiers numériques et aux unités de stockage car les réseaux avioniques prévoient déjà par leur construction de tels droits.

Enfin, l'invention permet d'éviter l'utilisation des emplacements de stockage dédiés au sein de différents équipements avioniques.

## Revendications

1. Procédé de stockage de fichiers numériques mis en œuvre par un réseau avionique déterministe et à routage prédéterminé ;
le réseau avionique étant mis en œuvre par un système de communication (20) comprenant au moins M équipements (24-1,...,24-M) et au moins N commutateurs (22-1,...,22-N) raccordés entre eux ;
chaque équipement (24-1,...,24-M) étant émetteur et/ou récepteur de fichiers numériques ;
chaque commutateur (22-1,...,22-N) étant apte à transmettre des fichiers numériques dans le réseau avionique au moyen de trames de données, chacun d'au moins certains commutateurs (22-1,...,22-N) comprenant une unité de stockage (32) configurée pour stocker au moins certains de ces fichiers numériques ;
chaque trame de données comprenant un identifiant définissant de manière certaine la provenance de cette trame ;
le procédé comprenant une phase d'écriture (PE) de fichiers numériques comprenant les étapes suivantes :
- détermination (110) par un équipement émetteur (24-1,...,24-M) d'un fichier numérique à stocker correspondant à un fichier d'origine modifiée ou à un nouveau fichier numérique créé ;
- association (120) d'une référence temporelle au fichier numérique à stocker ;
- envoi (130) du fichier numérique à stocker avec la référence temporelle associée vers K commutateurs (22-1,...,22-N) distincts au moyen d'une ou de plusieurs trames de données, le nombre K étant inférieur ou égal au nombre N;
- génération (140) par au moins certains des commutateurs (22-1,...,22-N) d'une copie du fichier numérique à stocker et stockage de cette copie dans l'unité de stockage (32) de chacun de ces commutateurs avec la référence temporelle associée.

2. Procédé selon la revendication 1, dans lequel la référence temporelle associée au fichier numérique à stocker comprend une date locale déterminée par l'équipement émetteur (24-1,...,24-M) correspondant et un point de référence relatif à cet équipement émetteur (24-1,...,24-M).

3. Procédé selon la revendication 2, dans lequel le point de référence relatif à un équipement émetteur (24-1,...,24-M) est un numéro de démarrage de cet équipement émetteur (24-1,...,24-M), avantageusement la date locale déterminée par cet équipement émetteur (24-1,...,24-M) correspondant au temps écoulé depuis son démarrage.

4. Procédé selon l'une quelconque des revendications précédentes, dans lequel l'étape d'envoie (130) du fichier numérique comprend en outre la génération d'un condensat d'intégrité pour la ou chaque trame de données transportant le fichier numérique à stocker ;
de préférence, une copie du fichier numérique à stocker étant stockée dans l'unité de stockage (32) du commutateur correspondant (22-1,...,22-N) uniquement lorsque le condensant d'intégrité de la ou de chaque trame transportant ce fichier est vérifié.

5. Procédé selon l'une quelconque des revendications précédentes, dans lequel :
- le fichier numérique à stocker est envoyé sans vérification de sa réception par les commutateurs correspondants (22-1,...,22-N) ; ou
- le procédé comprend en outre une étape de vérification (150) qu'au moins L commutateurs (22-1,...,22-N) ont reçu le fichier numérique à stocker, le nombre L étant inférieur ou égal au nombre K.

6. Procédé selon l'une quelconque des revendications précédentes, dans lequel le réseau avionique est conforme à un protocole de communication de type ARINC 664 P7 ;
de préférence, les fichiers numériques à stocker correspondant à un même fichier d'origine étant transportés par des trames de données ayant un même lien virtuel défini par ledit protocole.

7. Procédé selon l'une quelconque des revendications précédentes, dans lequel le fichier à stocker est envoyé par l'équipement émetteur (24-1,...,24-M) correspondant en régime de multidiffusion.

8. Procédé selon l'une quelconque des revendications précédentes, comprenant en outre une phase de lecture (PL) de fichiers numériques comprenant les étapes suivantes :
- envoi (210) de K requêtes vers K commutateurs (22-1,...,22-N) distincts au moyen d'une trame, pour restituer chaque copie d'un fichier à lire stockée dans l'unité de stockage (32) du commutateur (22-1,...,22-N) correspondant ;
- réception (220) de réponses à au moins certaines des requêtes envoyées, chaque réponse comprenant la référence temporelle associée à la copie correspondante du fichier à lire ;
- analyse (230) des références temporelles reçues et sélection de la référence temporelle correspondant au moment temporel le plus récent ;
- définition (240) du fichier à lire par sa copie associée à la référence temporelle sélectionnée.

9. Procédé selon la revendication 8, dans lequel chacune desdites réponses comprend en outre la copie correspondante du fichier à lire.

10. Procédé selon la revendication 8, dans lequel l'étape de définition (240) du fichier à lire comprend en outre la récupération de la copie du fichier à lire associée à la référence temporelle sélectionnée.

11. Procédé selon l'une quelconque des revendications 8 à 10, dans lequel la durée de la mise en œuvre de l'étape de réception (220) de réponses est limitée par un seuil prédéterminé.

12. Procédé selon l'une quelconque des revendications 8 à 11, dans lequel la phase de lecture (PL) comprend en outre une étape de vérification (250) d'un condensat d'intégrité de la ou de chaque trame de données transportant la copie du fichier à lire associé à la référence temporelle sélectionnée.

13. Procédé selon l'une quelconque des revendications 8 à 12, dans lequel chaque requête reçue est authentifiée par le commutateur (22-1,...,22-N) correspondant en utilisant l'identifiant de la trame transportant cette requête.

14. Procédé selon la revendication 13, dans lequel :
- le réseau avionique est conforme à un protocole de communication de type ARINC 664 P7 ;
- chaque requête reçue est authentifiée par le commutateur (22-1,...,22-N) correspondant en utilisant un lien virtuel (VL) de la trame transportant cette requête, le lien virtuel étant défini par ledit protocole.

15. Système de communication avionique (20) comprenant au moins M équipements (24-1,...,24-M) et au moins N commutateurs (22-1,...,22-N) raccordés entre eux, lesdits équipements et commutateurs étant configurés pour mettre en œuvre le procédé selon l'une quelconque des revendications précédentes.

## Patentansprüche

1. Verfahren zum Speichern digitaler Dateien, implementiert von einem deterministischen Avionik-Netzwerk mit vorbestimmtem Routing;
wobei das Avionik-Netzwerk durch ein Kommunikationssystem (20) implementiert ist, umfassend mindestens M Geräte (24-1, ..., 24-M) und mindestens N Schalter (22-1, ..., 22-N), die miteinander verbunden sind;
wobei jedes Gerät (24-1, ..., 24-M) ein Sender und/oder Empfänger von digitalen Dateien ist;
jeder Schalter (22-1, ..., 22-N) geeignet ist, um digitale Dateien in dem Avionik-Netzwerk mittels Datenblöcken zu übertragen, jeder der mindestens gewissen Schalter (22-1, ..., 22-N) umfassend eine Speichereinheit (32), die konfiguriert ist, um sie mindestens gewisse dieser digitalen Dateien zu speichern;
jeder Datenblock umfassend eine Kennung, die die Herkunft dieses Blocks auf sichere Weise definiert;
das Verfahren umfassend eine Schreibphase (PE) von digitalen Dateien, umfassend die folgenden Schritte:
- Bestimmen (110) durch ein Sendegerät (24-1, ..., 24-M) einer zu speichernden digitalen Datei, die einer veränderten Originaldatei oder einer neu erzeugten digitalen Datei entspricht;
- Assoziieren (120) einer Zeitreferenz mit der zu speichernden digitalen Datei;
- Senden (130) der zu speichernden digitalen Datei mit der assoziierten Zeitreferenz an K verschiedene Schalter (22-1, ..., 22-N) mittels eines oder mehrerer Datenblöcke, wobei die Anzahl K kleiner als oder gleich wie die Anzahl N ist;
- Erzeugen (140) durch mindestens gewisse der Schalter (22-1, ..., 22-N) einer Kopie der zu speichernden digitalen Datei und Speichern dieser Kopie in der Speichereinheit (32) von jedem dieser Schalter mit der assoziierten Zeitreferenz.

2. Verfahren nach Anspruch 1, wobei die mit der zu speichernden digitalen Datei assoziierte Zeitreferenz ein lokales Datum, das von dem entsprechenden Sendegerät (24-1, ..., 24-M) bestimmt wird, und einen Referenzpunkt in Bezug auf dieses Sendegerät (24-1, ..., 24-M) umfasst.

3. Verfahren nach Anspruch 2, wobei der Referenzpunkt in Bezug auf ein Sendegerät (24-1, ..., 24-M) eine Startnummer dieses Sendegeräts (24-1, ..., 24-M) ist, vorteilhafterweise das von diesem Sendegerät (24-1, ..., 24-M) bestimmte lokale Datum, das der Zeit entspricht, die seit seinem Start verstrichen ist.

4. Verfahren nach einem der vorherigen Ansprüche, wobei der Schritt eines Sendens (130) der digitalen Datei ferner das Erzeugen eines Integritätskondensats für den oder jeden Datenblock umfasst, der die zu speichernde digitale Datei transportiert;
vorzugsweise, wobei eine Kopie der zu speichernden digitalen Datei in der Speichereinheit (32) des entsprechenden Schalters (22-1, ..., 22-N) nur dann gespeichert wird, wenn der Integritätskondensator von dem oder jedem Block überprüft wird, der diese Datei transportiert.

5. Verfahren nach einem der vorherigen Ansprüche, wobei:
- die zu speichernde digitale Datei gesendet wird, ohne ihren Empfang durch die entsprechenden Schalter (22-1, ..., 22-N) zu überprüfen; oder
- das Verfahren ferner einen Verifizierungsschritt (150) umfasst, dass mindestens L Schalter (22-1, ..., 22-N) die zu speichernde digitale Datei empfangen haben, wobei die Zahl L kleiner als oder gleich wie die Zahl K ist.

6. Verfahren nach einem der vorherigen Ansprüche, wobei das Avionik-Netzwerk einem Kommunikationsprotokoll vom Typ ARINC 664 P7 entspricht;
wobei die zu speichernden digitalen Dateien, die derselben Ursprungsdatei entsprechen, vorzugsweise durch Datenblöcke transportiert werden, die dieselbe virtuelle Verbindung aufweisen, die durch das Protokoll definiert ist.

7. Verfahren nach einem der vorherigen Ansprüche, wobei die zu speichernde Datei von dem entsprechenden Sendegerät (24-1, ..., 24-M) in Mehrfachausstrahlungs-Modus gesendet wird.

8. Verfahren nach einem der vorherigen Ansprüche, ferner umfassend eine Lesephase (PL) von digitalen Dateien, umfassend die folgenden Schritte:
- Senden (210) von K Anfragen an K verschiedene Schalter (22-1, ..., 22-N) mittels eines Blocks, um jede Kopie einer zu lesenden Datei, die in der Speichereinheit (32) des entsprechenden Schalters (22-1, ..., 22-N) gespeichert ist, wiederzugeben;
- Empfangen (220) von Antworten auf mindestens gewisse der gesendeten Anfragen, jede Antwort umfassend die Zeitreferenz, die mit der entsprechenden Kopie der zu lesenden Datei assoziiert ist;
- Analysieren (230) der empfangenen Zeitreferenzen und Auswählen der Zeitreferenz, die dem jüngsten Zeitmoment entspricht;
- Definieren (240) der zu lesenden Datei durch ihre Kopie, die mit der ausgewählten Zeitreferenz assoziiert ist.

9. Verfahren nach Anspruch 8, wobei jede der Antworten ferner die entsprechende Kopie der zu lesenden Datei umfasst.

10. Verfahren nach Anspruch 8, wobei der Schritt eines Definierens (240) der zu lesenden Datei ferner ein Abrufen der Kopie der zu lesenden Datei umfasst, die mit der ausgewählten Zeitreferenz assoziiert ist.

11. Verfahren nach einem der Ansprüche 8 bis 10, wobei die Dauer der Durchführung der Implementierung des Empfangsschritts (220) von Antworten durch einen vorbestimmten Schwellenwert begrenzt ist.

12. Verfahren nach einem der Ansprüche 8 bis 11, wobei die Lesephase (PL) ferner einen Verifizierungsschritt (250) eines Integritätskondensats des oder jedes Datenblocks umfasst, der die Kopie der zu lesenden Datei transportiert, die mit der ausgewählten Zeitreferenz assoziiert ist.

13. Verfahren nach einem der Ansprüche 8 bis 12, wobei jede empfangene Anfrage von dem entsprechenden Schalter (22-1, ..., 22-N) unter Verwendung der Kennung des Blocks authentifiziert wird, der diese Anfrage transportiert.

14. Verfahren nach Anspruch 13, wobei:
- das Avionik-Netzwerk einem Kommunikationsprotokoll vom Typ ARINC 664 P7 entspricht;
- jede empfangene Anfrage durch den entsprechenden Schalter (22-1, ..., 22-N) unter Verwendung einer virtuellen Verbindung (VL) des Blocks authentifiziert wird, der diese Anfrage transportiert, wobei die virtuelle Verbindung durch das genannte Protokoll definiert ist.

15. Avionik-Kommunikationssystem (20), umfassend mindestens M Geräte (24-1, ..., 24-M) und mindestens N miteinander verbundene Schalter (22-122-N), wobei die Geräte und Schalter konfiguriert sind, um das Verfahren nach einem der vorherigen Ansprüche zu implementieren.

## Claims

1. A storage method of digital files carried out by a determinist avionic network with predetermined routing;
the avionic network being implemented by a communication system (20) comprising at least M end systems (24-1,...,24-M) and at least N switches (22-1,...,22-N) connected to one another;
each end system (24-1,...,24-M) being sender and/or receiver of digital files;
each switch (22-1,...,22-N) being able to send digital files over the avionic network using data frames, each of at least some switches (22-1,...,22-N) comprising a storage unit (32) configured to store at least some of these digital files;
each data frame comprising an identifier defining the origin of this frame in a definite manner;
the method comprising a phase (PE) for writing digital files comprising the following steps:
- determining (110) by a sender end system (24-1,...,24-M) a digital file to be stored corresponding to a modified original file or a new created digital file;
- associating (120) a time reference with the digital file to be stored;
- sending (130) the digital file to be stored with the associated time reference to K separate switches (22-1,...,22-N) using one or several data frames, the number K being less than or equal to the number N;
- generating (140), via at least some of the switches (22-1,...,22-N), a copy of the digital file to be stored and storing this copy in the storage unit (32) of each of these switches with the associated time reference.

2. The method according to claim 1, wherein the time reference associated with the digital file to be stored comprises a local date determined by the corresponding sender end system (24-1,...,24-M) and a reference point relative to this sender end system (24-1,...,24-M).

3. The method according to claim 2, wherein the reference point relative to a sender end system (24-1,...,24-M) is a starting number of this sender end system (24-1,...,24-M), advantageously the local date determined by this sender end system (24-1,...,24-M) corresponding to the time elapsed since it was started.

4. The method according to any one of the preceding claims, wherein the step for sending (130) the digital file further comprises generating an integrity digest for the or each data frame transporting the digital file to be stored;
preferably, a copy of the digital file to be stored is stored in the storage unit (32) of the corresponding switch (22-1,...,22-N) only when the integrity digest of the or each frame transporting this file is verified.

5. The method according to any one of the preceding claims, wherein:
- the digital file to be stored is sent without verification of its receipt by the corresponding switches (22-1,...,22-N); or
- the method further comprises a step (150) for verifying that at least L switches (22-1,...,22-N) have received the digital file to be stored, the number L being less than or equal to the number K.

6. The method according to any one of the preceding claims, wherein the avionic network is according to a communication protocol of type ARINC 664 P7;
preferably, the digital files to be stored corresponding to a same original file are transported by data frames having a same virtual link defined by said protocol.

7. The method according to any one of the preceding claims, wherein the file to be stored is sent by the corresponding sender end system (24-1,...,24-M) in multicast mode.

8. The method according to any one of the preceding claims, further comprising a phase (PL) for reading digital files comprising the following steps:
- sending (210) K requests to K separate switches (22-1,...,22-N) using a frame, in order to restore each copy of a file to be read stored in the storage unit (32) of the corresponding switch (22-1,...,22-N);
- receiving (220) responses to at least some of the sent requests, each response comprising the time reference associated with the corresponding copy of the file to be read;
- analyzing (230) received time references and selecting the time reference corresponding to the most recent moment in time;
- defining (240) the file to be read by its copy associated with the selected time reference.

9. The method according to claim 8, wherein each of said responses further comprises the corresponding copy of the file to be read.

10. The method according to claim 8, wherein the step for defining (240) the file to be read further comprises recovering the copy of the file to be read associated with the selected time reference.

11. The method according to any one of claims 8 to 10, wherein the implementation duration of the step (220) for receiving responses is limited by a predetermined threshold.

12. The method according to any one of claims 8 to 11, wherein the reading phase (PL) further comprises a step for verifying (250) an integrity digest of the or each data frame transporting the copy of the file to be read associated with the selected time reference.

13. The method according to any one of claims 8 to 12, wherein each received request is authenticated by the corresponding switch (22-1,...,22-N) by using the identifier of the frame transporting this request.

14. The method according to claim 13, wherein:
- the avionic network is according to a communication protocol of type ARINC 664 P7;
- each received request is authenticated by the corresponding switch (22-1,...,22-N) by using a virtual link (VL) of the frame transporting this request, the virtual link being defined by said protocol.

15. An avionic communication system (20) comprising at least M end systems (24-1,...,24-M) and at least N switches (22-1,...,22-N) connected to one another, said end systems and switches being configured to carry out the method according to any one of the preceding claims.
